# EUROPEAN PATENT APPLICATION

(11) **EP 4 661 316 A1**
(43) Date of publication of application: **10.12.2025**
(21) Application number: 24891583.7
(22) Date of filing: 02.07.2024
(51) Int. Cl.: H04B 10/075, H04B 10/114, H01M 10/42

(54) **INSPECTION DEVICE AND METHOD FOR INSPECTING COMMUNICATION STATE OF BATTERY MANAGEMENT DEVICE BY SAME**

(30) Priority: 15.11.2023 KR 20230158101
(71) Applicant: LG Energy Solution, Ltd., Seoul 07335 (KR)
(72) Inventor: PARK, Hye Jin, Daejeon 34122 (KR); KIM, Youngbeom, Daejeon 34122 (KR); YOON, Sunwoo, Daejeon 34122 (KR)
(74) Representative: Plasseraud IP
(86) International application number: PCT/KR2024/009287
(87) International publication number: WO 2025/105634

(57) **Abstract**

An inspection device for inspecting a communication state of a battery management device according to an embodiment of the present disclosure may include: a base member; a distance-variable part which is disposed on the base member, to which a first battery management device including a first optical communication part is mounted, and which is movable in the direction of a first axis; and an angle-variable part including a first rotation structure which is disposed on the base member, to which a second battery management device including a second optical communication part is mounted, and which is rotatable around a second axis orthogonal to the first axis, and a second rotation structure which is rotatable around a third axis orthogonal to the first axis and the second axis, wherein the first optical communication part and the second optical communication part are arranged to face each other.

## Description

### Technical Field

The present disclosure relates to an inspection device and a method of checking a communication status of a battery management device thereof, and specifically, relates to technology of checking an optical transceiver of a battery management device.

### Background Art

In general, wireless optical communication is used for communication between battery management devices (or battery management systems (BMSs)) that manage battery modules. For example, a variety of information can be exchanged between the battery management devices through infrared optical communication. An optical transceiver of each battery management device may include a transmitting diode for transmitting infrared light containing communication information and a receiving diode for receiving the infrared light. In other words, two battery management devices can perform optical communications in a state of being arranged with the transmitting diode and the receiving diode facing each other.

Such infrared optical communications may have varying communication sensitivity depending on the distance and angle between the battery management devices. For example, the communication sensitivity of infrared optical communications can vary depending on the distance and angle between the battery management devices. Specifically, depending on factors such as the installation tolerances of each battery management device, the structure of the optical transceiver and the color of the optical transceiver, the distance and the angle between the battery management devices that result in optimal communication sensitivity may vary. In existing technology, battery management devices are installed according to the experience of a worker assembling the battery management devices and the generally applicable design specifications. In this case, problems may arise in that the distance and the angle required to achieve an accurate communication range or optimal communication sensitivity for each battery management device are not applied.

### Detailed Description of the Invention

### Technical Goals

According to one example embodiment of the present disclosure, the technical task is to specifically define a communication range of the optical transceiver of a battery management device.

According to one example embodiment of the present disclosure, the technical task is to identify a communication range with the optimal communication sensitivity for battery management devices.

According to one example embodiment of the present disclosure, the technical task is to design a battery pack in order for battery management devices to have the optimal communication sensitivity.

### Technical solutions

According to an aspect, there is provided an inspection device configured to check a communication status of a battery management device, the inspection device including a base member, a distance changing part that is placed on the base member and equipped with a first battery management device including a first optical transceiver, and configured to move in a first axis direction, and an angle changing part that is placed on the base member and equipped with a second battery management device including a second optical transceiver, and includes a first rotation structure configured to rotate around a second axis orthogonal to the first axis and a second rotation structure configured to rotate around a third axis orthogonal to the first axis and the second axis, wherein the first optical transceiver and the second optical transceiver are placed to be facing each other.

According to an example embodiment, the distance changing part may include a reference plate, a first fixing part configured to fix the first battery management device on the reference plate, and a movement member configured to move the reference plate in the first axis direction.

According to an example embodiment, the distance changing part may further include a distance measuring member that is placed along the first axis direction and configured to measure a distance between the first optical transceiver and the second optical transceiver on the first axis.

According to an example embodiment, the angle changing part may include a second fixing part configured to fix the second battery management device on the second rotation structure, a first rotation member configured to rotate the first rotation structure around the second axis, and a second rotation member configured to rotate the second rotation structure around the third axis.

According to an example embodiment, the angle changing part may further include a first angle measuring member that is formed in the first rotation structure, and configured to measure an angle by which the second optical transceiver is rotated on a first plane orthogonal to the second axis, and a second angle measuring member that is formed in the second rotation structure, and configured to measure an angle by which the second optical transceiver is rotated on a second plane orthogonal to the third axis.

According to an example embodiment, the first rotation member and the second rotation member may be rotation members configured to be capable of rotating by an angle.

According to an example embodiment, the movement member is configured to be capable of moving by a length.

According to an example embodiment, the inspection device may further include a communication circuit configured to communicate with the first battery management device and the second battery management device, a memory and a processor. According to an example embodiment, the processor may be configured to obtain a first distance between the first optical transceiver and the second optical transceiver on the first axis, from the distance changing part, obtain a first angle by which the second optical transceiver is rotated from a first reference line on a first plane, from the angle changing part, obtain a second angle by which the second optical transceiver is rotated from a second reference line on a second plane, from the angle changing part, and obtain first information about communication sensitivity between the first optical transceiver and the second optical transceiver, from the first battery management device and the second battery management device.

According to an example embodiment, the processor may configured to associate the first distance, the first angle, the second angle and the first information about the communication sensitivity with each other and store the first distance, the first angle, the second angle and the first information in the memory.

According to an example embodiment, the processor may be configured to control the distance changing part in order for a distance between the first optical transceiver and the second optical transceiver to be changed from the first distance to a second distance on the first axis, and obtain second information about the communication sensitivity between the first optical transceiver and the second optical transceiver, from the first battery management device and the second battery management device.

According to an example embodiment, the processor may be configured to associate the second distance, the first angle, the second angle and the second information about the communication sensitivity with each other and store the second distance, the first angle, the second angle and the second information in the memory.

According to an example embodiment, the processor may be configured to control the angle changing part in order for an angle by which the second optical transceiver is rotated from the first reference line on the first plane to be changed from the first angle to a third angle, control the angle changing part in order for an angle by which the second optical transceiver is rotated from the second reference line on the second plane to be changed from the second angle to a fourth angle, and obtain third information about the communication sensitivity between the first optical transceiver and the second optical transceiver from the first battery management device and the second battery management device.

According to an example embodiment, the processor may be configured to associate the first distance, the third angle, the fourth angle, and the third information about the communication sensitivity with each other and store the first distance, the third angle, the fourth angle, and the third information in the memory.

According to an example embodiment, the processor may be configured to select a single piece of information about communication sensitivity with a highest communication sensitivity among a plurality of pieces of information about communication sensitivity stored in the memory, identify a distance between the first optical transceiver and the second optical transceiver, an angle by which the second optical transceiver is rotated on the first plane and an angle by which the second optical transceiver is rotated on the second plane, related to the selected single piece of information about the communication sensitivity, and determine an identified distance and an identified angle as optimal communication specifications between the first battery management device and the second battery management device.

### Effects of the Invention

According to the example embodiments, the communication range of an optical transceiver of a battery management device may be specifically defined.

According to the example embodiments, a communication range having optimal communication sensitivity may be identified for battery management devices.

According to the example embodiments, a battery pack may be designed in order for a battery management device to have optimal communication sensitivity.

### Brief Description of Drawings

FIGS. 1A and 1B are diagrams illustrating an inspection device according to one example embodiment of the present disclosure.
FIGS. 2A and 2B are drawings illustrating an angle changing part according to one example embodiment of the present disclosure.
FIG. 3 is a drawing illustrating a distance changing part of an inspection device according to one example embodiment of the present disclosure.
FIG. 4 is a drawing illustrating an angle measuring member according to one example embodiment of the present disclosure.
FIG. 5 is a drawing illustrating a state in which a first battery management device and a second battery management device are mounted on an inspection device according to one example embodiment of the present disclosure.
FIG. 6 is a diagram for explaining a method for checking communication sensitivity while adjusting the distance between battery management devices according to one example embodiment of the present disclosure.
FIGS. 7A and 7B are diagrams for explaining a method for checking communication sensitivity by adjusting an angle between battery management devices according to one example embodiment.
FIG. 8 is a block diagram of an inspection device according to one example embodiment of the present disclosure.
FIG. 9 is a processing flow diagram of an inspection device according to one example embodiment of the present disclosure.

### Mode for Carrying Out the Invention

Terms used in the example embodiments are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising or including" a component, it does not exclude another component but may further include another component unless otherwise stated. Furthermore, terms such as "... unit," "... group," and "... module" described in the specification mean a unit that processes at least one function or operation, which may be implemented as hardware, software, or a combination thereof.

Expression "at least one of a, b and c" described throughout the specification may include "a alone," "b alone," "c alone," "a and b," "a and c," "b and c" or "all of a, b and c."

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

Hereinafter, example embodiments of the present disclosure will be described in detail with reference to the accompanying drawings.

In describing the example embodiments, descriptions of technical contents that are well known in the technical field to which the present disclosure pertains and that are not directly related to the present disclosure will be omitted. This is to more clearly convey the gist of the present disclosure without obscuring the gist of the present disclosure by omitting unnecessary description.

For the same reason, some elements are exaggerated, omitted or schematically illustrated in the accompanying drawings. In addition, the size of each element does not fully reflect the actual size. In each figure, the same or corresponding elements are assigned the same reference numerals.

Advantages and features of the present disclosure, and a method of achieving the advantages and the features will become apparent with reference to the example embodiments described below in detail together with the accompanying drawings. However, the present disclosure is not limited to the example embodiments disclosed below and may be implemented in various different forms. The example embodiments are provided only so as to render the present disclosure complete, and completely inform the scope of the present disclosure to those of ordinary skill in the art to which the present disclosure pertains. The present disclosure is only defined by the scope of the claims. Like reference numerals refer to like elements throughout.

In this case, it will be understood that each block of a flowchart diagram and a combination of the flowchart diagrams may be performed by computer program instructions. The computer program instructions may be embodied in a processor of a general-purpose computer or a special purpose computer or may be embodied in a processor of other programmable data processing equipment. Thus, the instructions, executed via a processor of a computer or other programmable data processing equipment, may generate a part for performing functions described in the flowchart blocks. To implement a function in a particular manner, the computer program instructions may also be stored in a computer-usable or computer-readable memory that may direct a computer or other programmable data processing equipment. Thus, the instructions stored in the computer usable, or computer readable memory may be produced as an article of manufacture containing an instruction part for performing the functions described in the flowchart blocks. The computer program instructions may be embodied in a computer or other programmable data processing equipment. Thus, a series of operations may be performed in a computer or other programmable data processing equipment to create a computer-executed process, and the computer or other programmable data processing equipment may provide steps for performing the functions described in the flowchart blocks.

Additionally, each block may represent a module, a segment, or a portion of code that includes one or more executable instructions for executing a specified logical function(s). It should also be noted that in some alternative implementations the functions recited in the blocks may occur out of order. For example, two blocks shown one after another may be performed substantially at the same time, or the blocks may sometimes be performed in the reverse order according to a corresponding function.

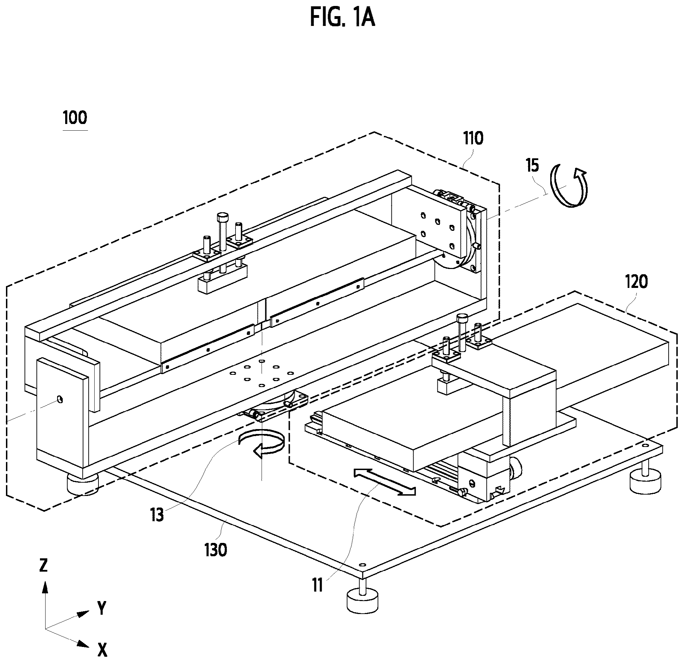

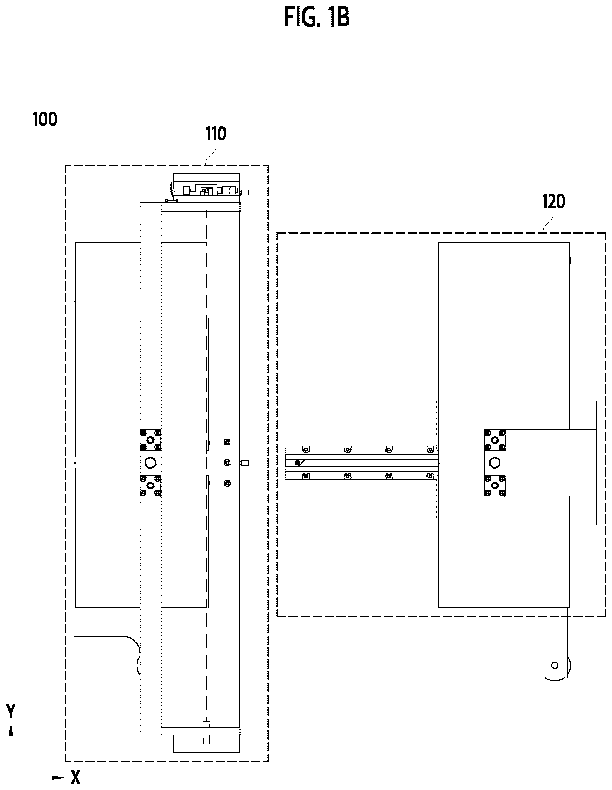

FIGS. 1A and 1B are diagrams illustrating an inspection device 100 according to one example embodiment of the present disclosure. FIG. 1A is a perspective view of the inspection device 100, and FIG. 1B is a plan view of the inspection device 100 when the inspection device 100 viewed from above.

In one example embodiment, the inspection device 100 may be a device that checks the communication status of a battery management device (or a battery management system (BMS)). The inspection device 100 may check the communication range or communication sensitivity between two battery management devices. The battery management device may include an optical transceiver for communications. The optical transceiver may be, for example, a communication unit that performs infrared communication. The optical transceiver may include a transmitting diode for transmitting infrared light and a receiving diode for receiving infrared light. Two battery management devices may communicate wirelessly via infrared light while facing each other through optical transceivers. For example, infrared light may be transmitted from the optical transceiver of the first battery management device, and the transmitted infrared light may be received from the optical transceiver of the second battery management device. The infrared light may include communication information.

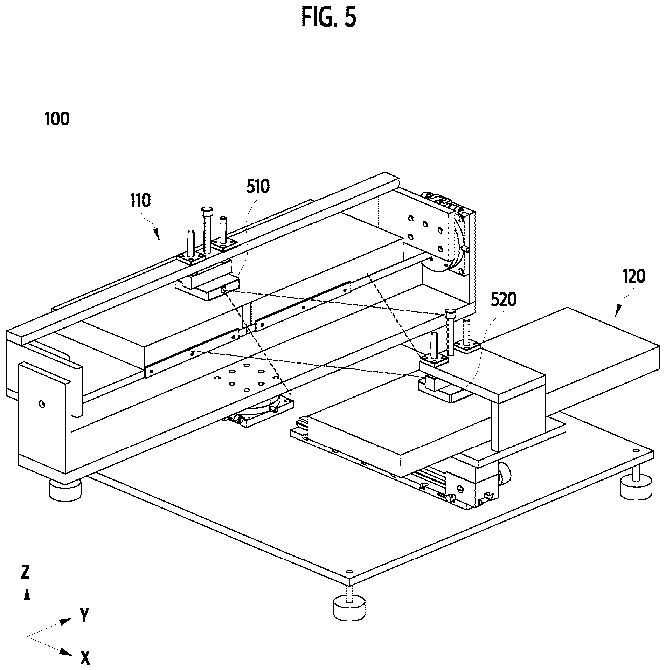

The battery management device of the present disclosure may be a battery management system (BMS) that manages and controls a battery pack. The battery management device may perform wireless optical communication using infrared light with another battery management device. Example embodiments in which two battery management devices are mounted on the inspection device 100 will be described starting with FIG. 5.

The communication sensitivity of the infrared optical communication described above may vary depending on the distance between the battery management devices and the angle by which the infrared light is irradiated. The distance and the angle required for the optimal communication sensitivity may vary from battery management device to battery management device due to factors such as the installation tolerances of each battery management device, the structure of the optical transceiver and the color of the optical transceiver.

The inspection device 100 according one example embodiment may identify the distance and the angle to achieve optimal communication sensitivity between two battery management devices. The inspection device 100 may measure the communication sensitivity between two battery management devices by adjusting the distance between the battery management devices. The inspection device 100 may measure the communication sensitivity between two battery management devices by adjusting the light irradiation angle between the optical transceivers of each battery management device. The light irradiation angle may include the irradiation angle on the first plane (for example, the x-y plane) and the irradiation angle on the second plane (for example, the x-z plane).

The inspection device 100 according to one example embodiment may include a base member 130, an angle changing part 110 and a distance changing part 120. The distance changing part 120 may be placed on the base member 130. The angle changing part 110 may be placed on the base member 130. Two battery management devices may be mounted on the angle changing part 110 and the distance changing part 120, respectively. For example, the first battery management device may be mounted on the distance changing part 120, and the second battery management device may be mounted on the angle changing part 110. The first optical transceiver of the first battery management device and the second optical transceiver of the second battery management device may be arranged (mounted) to face each other.

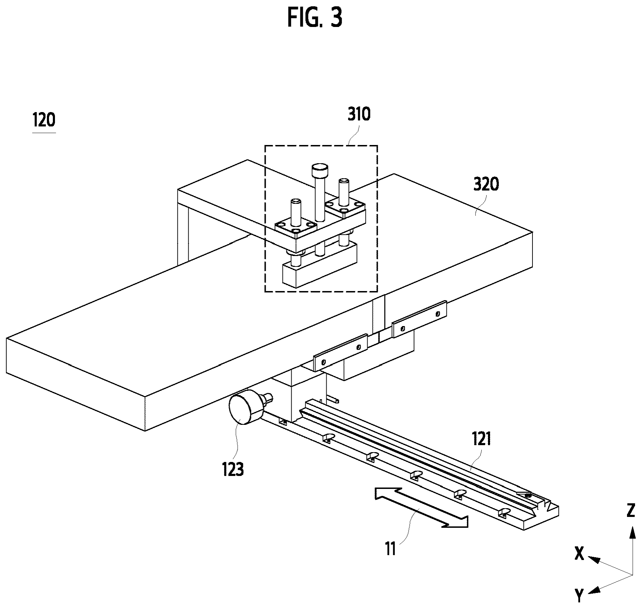

The distance changing part 120 according to one example embodiment may move in a first axis direction 11. For example, the first axis could be an axis parallel to the x-axis. The first axis direction 11 may indicate, for example, the +x-axis direction and the -x-axis direction, and may mean the direction of movement on the x-axis. For example, the distance changing part 120 may have a translation motion in the first axis direction 11. The distance changing part 120 may move in the x-axis direction by manipulation of a user, and may also move in the x-axis direction by electronic manipulation of the processor of the inspection device 100. The distance changing part 120 may include a reference plate, a first fixing part for fixing a first battery management device on the reference plate and a movement member configured to move the reference plate in the first axis direction. The structure of the distance changing part 120 will be described later with reference to FIG. 3.

The angle changing part 110 according to one example embodiment may rotate on the first plane. The first plane may be a plane orthogonal to a second axis 13. The second axis 13 may be an axis orthogonal to the first axis (for example, an axis parallel to the x-axis). For example, the first plane could be the x-y plane, and the second axis 13 could be an axis parallel to the z-axis. That is, the angle changing part 110 may rotate on the x-y plane with the second axis 13 as the rotation axis.

The angle changing part 110 according to one example embodiment may rotate on the second plane. The second plane may be a plane orthogonal to a third axis 15. The third axis 15 may be an axis orthogonal to the first axis and the second axis. For example, the second plane may be the x-z plane, and the third axis 15 may be an axis parallel to the y-axis.

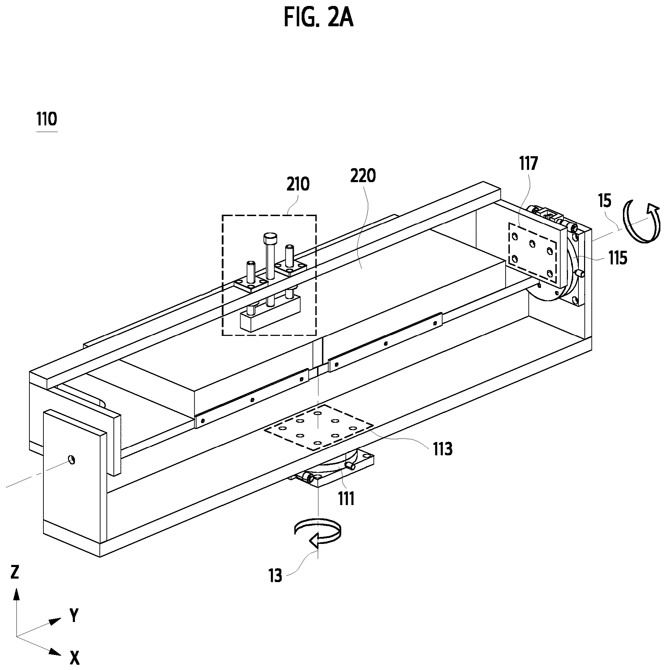

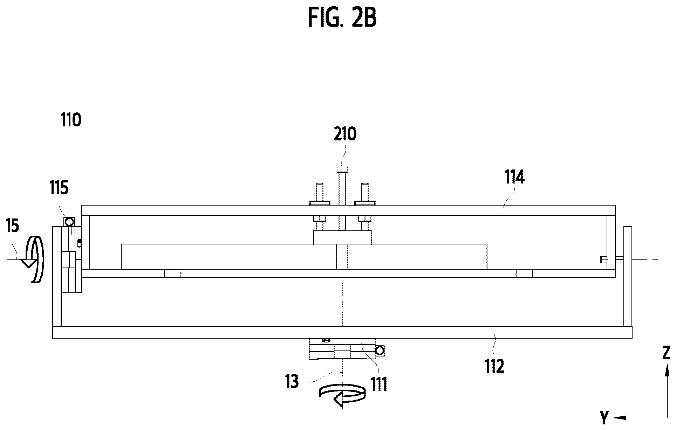

FIGS. 2A and 2B are drawings illustrating the angle changing part 110 according to one example embodiment of the present disclosure. FIG. 2A is a perspective view of the angle changing part 110, and FIG. 2B is a front view of the angle changing part 110.

Referring to FIGS. 2A and 2B, the angle changing part 110 according to one example embodiment may include a first rotation structure 112 and a second rotation structure 114. The angle changing part 110 may include a second fixing part 210 configured to fix the second battery management device on the second rotation structure 114, a first rotation member 111 configured to rotate the first rotation structure 112 around the second axis 13, and a second rotation member 115 configured to rotate the second rotation structure 114 around the third axis 15. The first rotation structure 112 and the second rotation structure 114 are connected to each other, and the second rotation structure 114 is connected so that it may rotate independently of the first rotation structure 112. In FIG. 2B, the first rotation structure 112 is connected to the first rotation member 111 and may rotate around the second axis 13 and may be a U-shaped structure. The second rotation structure 114 is connected to the second rotation member 115 and may rotate around the third axis 15, and may be a structure in the shape of a '□'.

The first rotation structure 112 according to one example embodiment is configured to rotate around the second axis 13 that is orthogonal to the first axis (for example, an axis parallel to the x-axis). The first rotation structure 112 may be coupled to the first rotation member 111. In other words, when the first rotation member 111 rotates, the first rotation structure 112 may rotate in the first plane (x-y plane) around the second axis 13. When the first rotation structure 112 rotates on the first plane by the first rotation member 111, the second rotation structure 114 may also rotate with the first rotation structure 112. Further, by rotating the first rotation structure 112 on the first plane by the first rotation member 111, adjusted is the irradiation angle on the first plane of infrared light irradiated from the optical transceiver of the second battery management device (not illustrated) mounted on the angle changing part 110.

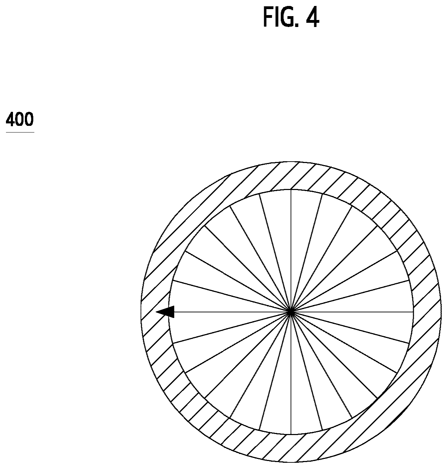

The angle changing part 110 may further include a first angle measuring member 113 formed in the first rotation structure 112. The first angle measuring member 113 may be a member configured to measure the angle by which the second optical transceiver of the second battery management device is rotated in the first plane (for example, the x-y plane) orthogonal to the second axis 13 (for example, the z-axis). For example, the first angle measuring member 113 may be a member having multiple grooves formed on the first rotation structure 112. As illustrated in FIG. 2A, in the first angle measuring member 113, a plurality of grooves corresponding to a plurality of predetermined angles are formed, and the first rotation member 111 may be connected to one of the multiple grooves. In one example embodiment, the first angle measuring member 113 may be a protractor. For example, as illustrated in FIG. 4, the first angle measuring member 113 may be a protractor configured to measure the angle by which the second optical transceiver of the second battery management device is rotated in the first plane from the reference line (from the zero position). The first angle measuring member 113 may be a protractor configured to measure the angle by which the second optical transceiver is rotated from the reference line in the x-y plane.

The second rotation structure 114 according to one example embodiment is configured to rotate about the first axis (for example, the axis parallel to the x-axis) and the third axis 15 orthogonal to the second axis 13. The second rotation structure 114 may be coupled to the second rotation member 115. That is, when the second rotation member 115 rotates, the second rotation structure 114 may rotate in the second plane (the x-z plane) around the third axis 15. The second rotation structure 114 may rotate independently of the first rotation structure 112, and thus when the second rotation member 115 rotates, the second rotation structure 114 rotates on the second plane but the first rotation structure 112 does not rotate. That is, by rotating the second rotation structure 114 on the second plane by the second rotation member 115, adjusted is the irradiation angle on the second plane of the infrared tube irradiated by the optical transceiver of the second battery management device.

The angle changing part 110 may further include a second angle measuring member 117 formed in the second rotation structure 114. The second angle measuring member 117 may be a member configured to measure the angle by which the second optical transceiver of the second battery management device is rotated in the second plane (for example, the x-z plane) orthogonal to the third axis 15 (for example, the y-axis). For example, the second angle measuring member 117 may be a member having multiple grooves formed on the second rotation structure 114. As illustrated in FIG. 2A, the second angle measuring member 117 has a plurality of grooves formed corresponding to a plurality of predetermined angles, and the second rotation member 115 may be connected to one of the multiple grooves. In one example embodiment, the second angle measuring member 117 may be a protractor. For example, as illustrated in FIG. 4, the second angle measuring member 117 may be a protractor 400 configured to measure the angle by which the second optical transceiver of the second battery management device is rotated in the second plane from the reference line (from the zero position). For example, as illustrated in FIG. 4, the second angle measuring member 117 may be the protractor 400 configured to measure the angle by which the second optical transceiver is rotated from the reference line in the x-z plane.

FIG. 3 is a drawing illustrating the distance changing part 120 of the inspection device 100 according to one example embodiment of the present disclosure. FIG. 3 is a perspective view of the distance changing part 120.

According to one example embodiment, the distance changing part 120 may be placed on the base member 130 of the inspection device 100. The distance changing part 120 may be equipped with a first battery management device (not illustrated) including a first optical transceiver. The distance changing part 120 may move in the direction of the first axis (for example, the x-axis). The first axis direction may mean, for example, the +x-axis direction and the -x-axis direction, and may mean the direction of movement on the x-axis.

The distance changing part 120 according to one example embodiment may include a reference plate 320, a first fixing part 310 and a movement member 121. The first battery management device may be located on the reference plate 320. The first fixing part 310 may fix the first battery management device placed on the reference plate 320. That is, the first battery management device may be positioned on the reference plate 320, and the first battery management device may be fixed with the first fixing part 310. The movement member 121 may move the reference plate 320 in the first axis direction. The movement member 121 may be, for example, a moving rail, and a plurality of grooves may be formed for movement and fixation to a plurality of specific positions. The distance changing part 120 may move in the x-axis direction by the manipulation of the user. For example, the user may grab a handle 123 of the distance changing part 120 and move the distance changing part 120 in the x-axis direction. According to another example embodiment, the distance changing part 120 may be moved in the x-axis direction by electronic manipulation of the processor of the inspection device 100.

The movement member 121 according to one example embodiment may be a member by which there is movement to a plurality of designed positions and may be a member by which there is movement by a unit length. For example, a plurality of grooves are formed at multiple positions in the movement member 121, and the reference plate 320 may be moved and fixed to each groove. For example, the movement member 121 may be a member that may move in 1 cm increments.

The distance changing part 120 according to one example embodiment may further include a distance measuring member (not illustrated) that is arranged along the first axis direction and configured to measure the distance between the first optical transceiver and the second optical transceiver on the first axis. The distance measuring member could be, for example, a ruler. The distance measuring member may be arranged in the first axis direction parallel to the movement member 121, and set the position of the second optical transceiver of the second battery management device (not illustrated) mounted on the angle changing part 110 as the zero point. Through the distance measuring member, the distance between the first optical transceiver of the first battery management device and the second optical transceiver of the second battery management device may be measured.

FIG. 5 is a drawing illustrating a state in which the inspection device 100 according to one example embodiment of the present disclosure is equipped with a first battery management device 520 and a second battery management device 510. In FIG. 5, the dotted lines indicate a field of view (FoV), which is the range over which infrared light is irradiated, and is illustrated to be exaggerated compared to the actual FoV of infrared light for convenience of explanation.

As described above, the first battery management device 520 may be mounted on the distance changing part 120 of the inspection device 100, and the second battery management device 510 may be mounted on the angle changing part 110 of the inspection device 100. The first optical transceiver of the first battery management device 520 and the second optical transceiver of the second battery management device 510 may be arranged (mounted) to face each other. The first optical transceiver and the second optical transceiver may perform wireless communication with each other using infrared light. For example, when the first optical transceiver irradiates infrared light containing communication information, the second optical transceiver may receive the irradiated infrared light and obtain the communication information. The communication sensitivity between the first optical transceiver and the second optical transceiver may vary depending on the distance and the angle between them. Therefore, the inspection device 100 may check communication sensitivity by adjusting the distance between the first optical transceiver and the second optical transceiver, and check communication sensitivity by adjusting the irradiation angle of light irradiated from the second optical transceiver.

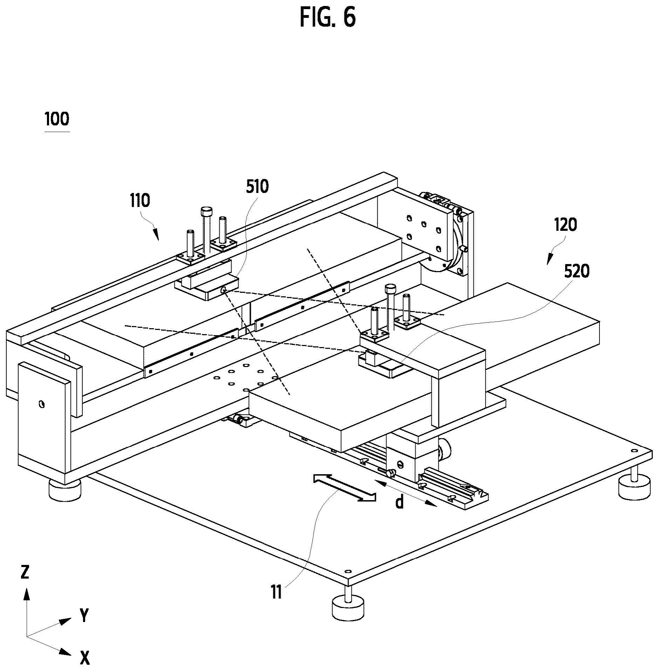

FIG. 6 is a drawing for explaining a method for checking communication sensitivity while adjusting the distance between battery management devices (510, 520) according to one example embodiment of the present disclosure. As described with reference to FIG. 5, the first battery management device 520 may be mounted on the distance changing part 120 of the inspection device 100, and the second battery management device 510 may be mounted on the angle changing part 110 of the inspection device 100.

Referring to FIG. 6, by controlling the distance changing part 120 of the inspection device 100, adjusted is the distance between the first optical transceiver of the first battery management device 520 and the second optical transceiver of the second battery management device 510. Compared to FIG. 5, it can be seen that the distance between the first optical transceiver and the second optical transceiver is reduced by d. The distance changing part 120 may also be moved in the first axis direction 11 (for example, in the direction of the x-axis) by the manipulation of a user, and may also be moved in the x-axis direction by electronic manipulation of the processor of the inspection device 100.

As described above, the inspection device 100 may check the communication sensitivity between the first optical transceiver and the second optical transceiver by changing the distance between the first optical transceiver and the second optical transceiver. The inspection device 100 may communicate with the first battery management device 520 and the second battery management device 510. For example, the inspection device 100 may be connected to the first battery management device 520 and the second battery management device 510 via wired or wireless communication. The inspection device 100 may obtain information about the communication sensitivity between the first optical transceiver and the second optical transceiver from the first battery management device 520 and the second battery management device 510. The information about communication sensitivity may be, for example, expressed numerically. A higher value indicating communication sensitivity may mean better communication sensitivity. The inspection device 100 may also receive information about communication sensitivity from each of the first battery management device 520 and the second battery management device 510, and may also receive information regarding communication sensitivity from either the first battery management device 520 or the second battery management device 510. The inspection device 100 may correlate information about the distance and angle between the first battery management device 520 and the second battery management device 510 and information about the communication sensitivity, and store them.

According to another example embodiment, an external terminal device may be connected to communicate with the first battery management device 520 and the second battery management device 510. In the above case, when the first battery management device 520 and the second battery management device 510 are mounted on the inspection device 100, the first battery management device 520 and the second battery management device 510 may be connected to communicate with an external terminal device. The external terminal device may be, for example, a personal computer, a laptop, a tablet PC, or a smartphone. The external terminal device may obtain the information about the communication sensitivity between the first optical transceiver and the second optical transceiver.

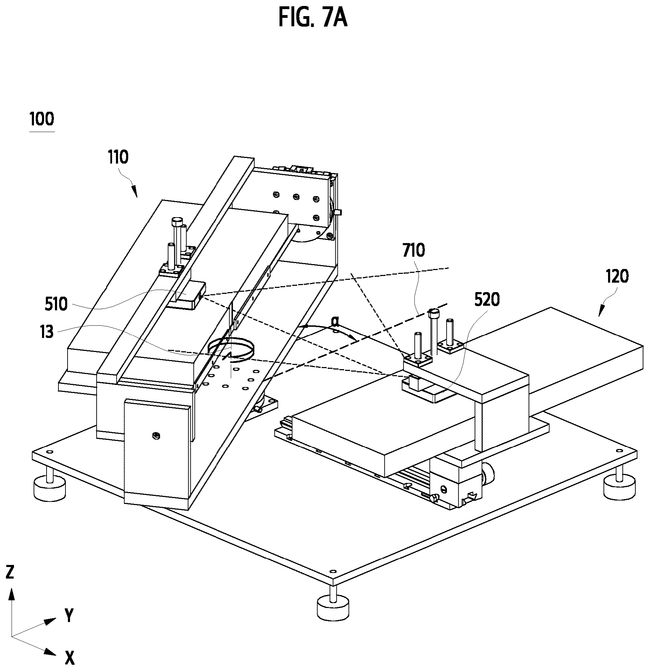

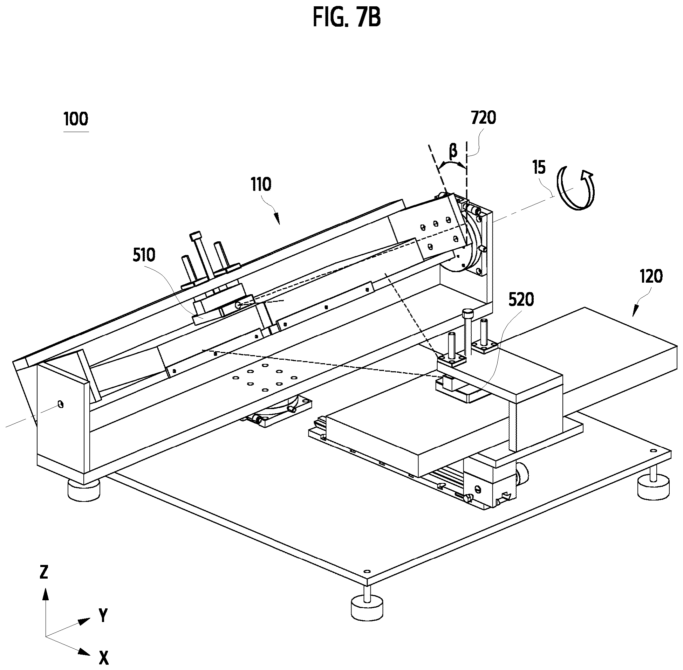

FIGS. 7A and 7B are drawings for explaining a method for checking communication sensitivity by adjusting the angle between battery management devices (510, 520) according to one example embodiment. As described with reference to FIGS. 5 and 6, the first battery management device 520 may be mounted on the distance changing part 120 of the inspection device 100, and the second battery management device 510 may be mounted on the angle changing part 110 of the inspection device 100.

Referring to FIG. 7A, by rotating the first rotation structure 112 on the first plane (for example, the x-y plane) through the angle changing part 110 of the inspection device 100, adjusted is the angle by which infrared light irradiated from the second optical transceiver of the second battery management device 510. Specifically, FIG. 7A is a drawing showing a state in which the angle changing part 110 of the inspection device 100 is rotated counterclockwise by an angle α when viewed from above on the first plane (for example, the x-y plane), when compared to FIG. 5. That is, the second optical transceiver of the second battery management device 510 mounted on the angle changing part 110 may irradiate infrared light to a position rotated counterclockwise by the angle α from a first reference line 710 on the first plane. The first reference line 710 may refer to a straight line parallel to the x-axis, which is the direction in which infrared light is irradiated in FIG. 5. When the first rotation structure 112 rotates around the second axis 13 on the first plane (x-y plane), the second rotation structure 114 may also rotate.

Referring to FIG. 7B, with rotation on a second plane (for example, the x-z plane) via the angle changing part 110 of the inspection device 10, adjusted is the angle by which infrared light irradiated from the second optical transceiver of the second battery management device 510 is irradiated on the second plane. Specifically, FIG. 7B is a diagram illustrating the state in which the angle changing part 110 of the inspection device 100 is rotated counterclockwise by an angle β on the second plane (for example, the x-z plane), when compared to FIG. 5. In other words, the second optical transceiver of the second battery management device 510 mounted on the angle changing part 110 may, on the second plane, irradiate infrared light to a position rotated counterclockwise by the angle β from a second reference line 720. The second reference line 720 may mean a straight line parallel to the z-axis. When the second rotation structure 114 rotates around the third axis 15 on the second plane (x-z plane), only the second rotation structure 114 may rotate, and the first rotation structure 112 may not rotate.

As described above, the inspection device 100 may check the communication sensitivity between the first optical transceiver and the second optical transceiver by changing the irradiation angle of the infrared light irradiated from the second optical transceiver. The inspection device 100 may communicate with the first battery management device 520 and the second battery management device 510. For example, the inspection device 100 may be connected to the first battery management device 520 and the second battery management device 510 via wired or wireless communication. The inspection device 100 may obtain information about the communication sensitivity between the first optical transceiver and the second optical transceiver from the first battery management device 520 and the second battery management device 510. The information about communication sensitivity may be, for example, expressed numerically.

FIG. 7A illustrates an example embodiment in which the first rotation structure 112 rotates on the first plane, and FIG. 7B illustrates an example embodiment in which the second rotation structure 114 rotates on the second plane, but it is apparent that the first rotation structure 112 and the second rotation structure 114 may rotate separately or simultaneously.

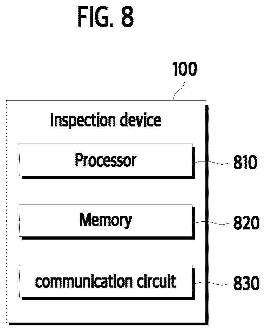

FIG. 8 is a block diagram of the inspection device 100 according to one example embodiment of the present disclosure. In the present disclosure, the inspection device 100 is a device that checks the communication status of a battery management device, and may be a device that is designed to mount (arrange) two battery management devices facing each other and configured to measure communication sensitivity by changing the distance between each other and the irradiation angle of infrared light.

The inspection device 100 according to one example embodiment may include a processor 810, a memory 820 and a communication circuit 830. At least one of the components included in the inspection device 100 may be omitted, or other components may be added to the battery module. Additionally or alternatively, some of the components may be implemented in an integrated manner, or may be implemented as singular or plural entities. At least some of the components within the inspection device 100 may be implemented in an integrated manner, or may be implemented as singular or multiple entities. At least some components within the inspection device 100 may be configured to transmit and receive data and/or signals, by being connected to each other through controller area network (CAN), bus, general purpose input/output (GPIO), serial peripheral interface (SPI), or mobile industry processor interface (MIPI).

According to one example embodiment, the processor 810 of the inspection device 100 is configured to perform operations and/or process data related to control and/or communication of each component of the inspection device 100, and may be operatively connected to components of the inspection device 100. The processor 810 may load commands or data received from other components of the inspection device 100 into the memory 820, process commands or data stored in the memory 820 and save the result data. The memory 820 of the inspection device 100 according to one example embodiment may store various data used by at least one component (for example, the processor 810). The memory 820 may store instructions for the operations of the processor 810 described above. The program may be stored as software in the memory 820, and may include, for example, an operating system, middleware, or an application.

The communication circuit 830 of the inspection device 100 according to one example embodiment may establish a wired or wireless communication channel with an external device (for example, a battery management device), and may transmit and receive various data with an external device. The communication circuit 830 of the inspection device 100 may include at least one port for connecting to an external device via a wired cable to communicate with the external device via a wired connection. The communication circuit 830 of the inspection device 100 may be configured to connect to a cellular network (for example, 3G, LTE, 5G, Wibro or Wimax) by including a cellular communication module. In one example embodiment, the communication circuit 830 of the inspection device 100 may transmit and receive data with an external device using short-range communications (for example, Wi-Fi, Bluetooth, Bluetooth Low Energy (BLE), UWB) including short-range communication modules, but the communication circuit 830 is not limited thereto.

According to one example embodiment, communicating with the first battery management device and the second battery management device, the inspection device 100 may receive various data from the first battery management device and the second battery management device. The inspection device 100 may obtain information about the communication sensitivity between the first optical transceiver and the second optical transceiver from the first battery management device and the second battery management device.

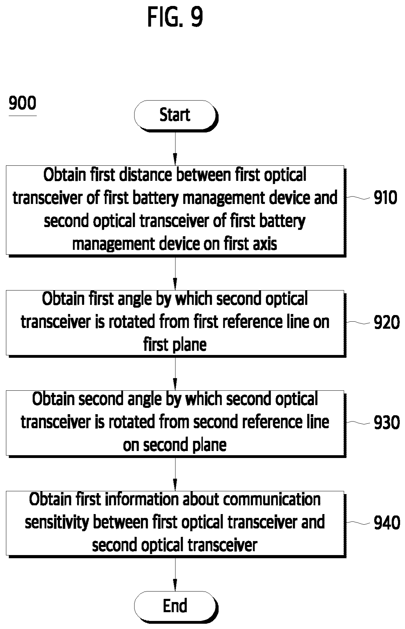

FIG. 9 is a processing flow diagram of the inspection device 100 according to one example embodiment of the present disclosure.

Referring to a processing flowchart 900, in operation 910, the processor 810 of the inspection device 100 according to one example embodiment may obtain the first distance between the first optical transceiver and the second optical transceiver on the first axis from the distance changing part 120. Under the control of the processor 810, the distance measuring member of the distance changing part 120 may measure the distance between the first optical transceiver of the first battery management device and the second optical transceiver of the second battery management device. The processor 810 may obtain the distance measured by the distance measuring member.

In operation 920, the processor 810 of the inspection device 100 according to one example embodiment may obtain the first angle by which the second optical transceiver is rotated from the first reference line on the first plane from the angle changing part 110. Under the control of the processor 810, the first angle measuring member 113 of the angle changing part 110 may measure the angle by which the second optical transceiver of the second battery management device is rotated around the second axis 13 (for example, an axis parallel to the z-axis) in the first plane (for example, the x-y plane). The processor 810 may obtain a first angle by which the second optical transceiver is rotated from the first reference line on the first plane from the first angle measuring member 113.

In operation 930, the processor 810 of the inspection device 100 according to one example embodiment may obtain a second angle by which the second optical transceiver is rotated from the second reference line on the second plane from the angle changing part 110. Under the control of the processor 810, the second angle measuring member 117 of the angle changing part 110 may measure the angle by which the second optical transceiver of the second battery management device is rotated around the third axis 15 (for example, the axis parallel to the y-axis) in the second plane (for example, the x-z plane). The processor 810 may obtain the second angle by which the second optical transceiver is rotated around the second reference line in the second plane from the second angle measuring member 117.

In operation 940, the processor 810 of the inspection device 100 according to one example embodiment may obtain first information about the communication sensitivity between the first optical transceiver and the second optical transceiver from the first battery management device and the second battery management device. Through the communication circuit 830, the processor 810 may obtain the first information about the communication sensitivity between the first optical transceiver and the second optical transceiver from the first battery management device and the second battery management device. The processor 810 may obtain the first information about the communication sensitivity between the first optical transceiver and the second optical transceiver from each of the first battery management device and the second battery management device.

According to one example embodiment, the processor 810 may associate the first distance, the first angle, and the first information about the communication sensitivity each other and store them in the memory 820. In other words, the processor 810 may associate the placement conditions (in other words, the distance and angle conditions) of the first battery management device and the second battery management device with the communication sensitivity and create a database.

According to one example embodiment, the processor 810 may control the distance changing part 120 in order for the distance between the first optical transceiver and the second optical transceiver on the first axis to be changed from the first distance to the second distance. After then, the processor 810 may obtain second information regarding communication sensitivity between the first optical transceiver and the second optical transceiver from the first battery management device and the second battery management device. The processor 810 may associate the second distance, the first angle, the second angle, and the second information about the communication sensitivity with each other and store them in the memory 820. That is, the inspection device 100 may measure the communication sensitivity between the first optical transceiver and the second optical transceiver by adjusting the distance between the first battery management device and the second battery management device.

According to one example embodiment, the processor 810 may control the angle changing part 110 in order for the angle by which the second optical transceiver rotates from the first reference line on the first plane to be changed from the first angle to the third angle. The processor 810 may control the angle changing part 110 in order for the angle by which the second optical transceiver rotates from the second reference line in the second plane to be changed from the second angle to the fourth angle. The processor 810 may obtain third information about the communication sensitivity between the first optical transceiver and the second optical transceiver from the first battery management device and the second battery management device. After then, the processor 810 may associate the first distance, the third angle, the fourth angle, and third information about communication sensitivity each other and store them in the memory 820. That is, the inspection device 100 may measure the communication sensitivity between the first optical transceiver and the second optical transceiver by adjusting the irradiation angle of infrared light between the first battery management device and the second battery management device.

In one example embodiment, the processor 810 may select a single piece of information about communication sensitivity having the highest communication sensitivity among a plurality of pieces of information about the communication sensitivity. The processor 810 may identify the distance between the first optical transceiver and the second optical transceiver associated with the selected single piece of information about the communication sensitivity, the angle by which the second optical transceiver is rotated on the first plane, and the angle by which the second optical transceiver is rotated on the second plane. The processor 810 may determine the identified distance and angle as the optimal communication specifications between the first battery management device and the second battery management device. In other words, the inspection device 100 may determine the placement condition with the highest communication sensitivity as the optimal placement condition after measuring the communication sensitivity under various placement conditions of the battery management devices.

Meanwhile, in the present disclosure and drawings, example embodiments are disclosed, and certain terms are used. However, the terms are only used in general sense to easily describe the technical content of the present disclosure and to help the understanding of the present disclosure, but not to limit the scope of the present disclosure. It is apparent to those of ordinary skill in the art to which the present disclosure pertains that other modifications based on the technical spirit of the present disclosure may be implemented in addition to the example embodiments disclosed herein.

The electronic device or terminal according to the above-described example embodiments may include a processor, a memory for storing and executing program data, a permanent storage such as a disk drive, and/or a user interface device such as a communication port, a touch panel, a key and/or a button that communicates with an external device. Methods implemented as software modules or algorithms may be stored in a computer-readable recording medium as computer-readable codes or program instructions executable on the processor. Here, the computer-readable recording medium includes a magnetic storage medium (for example, ROMs, RAMs, floppy disks and hard disks) and an optically readable medium (for example, CD-ROMs and DVDs). The computer-readable recording medium may be distributed among network-connected computer systems, so that the computer-readable codes may be stored and executed in a distributed manner. The medium may be readable by a computer, stored in a memory, and executed on a processer.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic and/or look-up table, that may execute various functions by the control of one or more microprocessors or other control devices. Similar to that elements may be implemented as software programming or software elements, the example embodiments may be implemented in a programming or scripting language such as C, C++, Java, assembler, Python, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means" and "configuration" may be used broadly and are not limited to mechanical and physical elements. The terms may include the meaning of a series of routines of software in association with a processor or the like.

The above-described example embodiments are merely examples, and other embodiments may be implemented within the scope of the claims to be described later.

## Claims

1. An inspection device configured to check a communication status of a battery management device, the inspection device comprising:
a base member;
a distance changing part that is placed on the base member and equipped with a first battery management device comprising a first optical transceiver, and configured to move in a first axis direction; and
an angle changing part that is placed on the base member and equipped with a second battery management device comprising a second optical transceiver, and comprises a first rotation structure configured to rotate around a second axis orthogonal to the first axis and a second rotation structure configured to rotate around a third axis orthogonal to the first axis and the second axis,
wherein the first optical transceiver and the second optical transceiver are placed to be facing each other.

2. The inspection device of claim 1, wherein the distance changing part comprises:
a reference plate;
a first fixing part configured to fix the first battery management device on the reference plate; and
a movement member configured to move the reference plate in the first axis direction.

3. The inspection device of claim 2, wherein the distance changing part further comprises a distance measuring member that is placed along the first axis direction, and configured to measure a distance between the first optical transceiver and the second optical transceiver on the first axis.

4. The inspection device of claim 2, wherein the angle changing part comprises:
a second fixing part configured to fix the second battery management device on the second rotation structure;
a first rotation member configured to rotate the first rotation structure around the second axis; and
a second rotation member configured to rotate the second rotation structure around the third axis.

5. The inspection device of claim 4, wherein the angle changing part further comprises:
a first angle measuring member that is formed in the first rotation structure, and configured to measure an angle by which the second optical transceiver is rotated on a first plane orthogonal to the second axis; and
a second angle measuring member that is formed in the second rotation structure, and configured to measure an angle by which the second optical transceiver is rotated on a second plane orthogonal to the third axis.

6. The inspection device of claim 4, wherein the first rotation member and the second rotation member are rotation members configured to be capable of rotating by an angle.

7. The inspection device of claim 4, wherein the movement member is configured to be capable of moving by a length.

8. The inspection device of claim 1, further comprising:
a communication circuit configured to communicate with the first battery management device and the second battery management device;
a memory; and
a processor,
wherein the processor is configured to:
obtain a first distance between the first optical transceiver and the second optical transceiver on the first axis, from the distance changing part;
obtain a first angle by which the second optical transceiver is rotated from a first reference line on a first plane, from the angle changing part;
obtain a second angle by which the second optical transceiver is rotated from a second reference line on a second plane, from the angle changing part; and
obtain first information about communication sensitivity between the first optical transceiver and the second optical transceiver, from the first battery management device and the second battery management device.

9. The inspection device of claim 8, wherein the processor is configured to associate the first distance, the first angle, the second angle and the first information about the communication sensitivity with each other and store the first distance, the first angle, the second angle and the first information in the memory.

10. The inspection device of claim 8, wherein the processor is configured to:
control the distance changing part in order for a distance between the first optical transceiver and the second optical transceiver to be changed from the first distance to a second distance on the first axis; and
obtain second information about the communication sensitivity between the first optical transceiver and the second optical transceiver, from the first battery management device and the second battery management device.

11. The inspection device of claim 10, wherein the processor is configured to associate the second distance, the first angle, the second angle and the second information about the communication sensitivity with each other and store the second distance, the first angle, the second angle and the second information in the memory.

12. The inspection device of claim 8, wherein the processor is configured to:
control the angle changing part in order for an angle by which the second optical transceiver is rotated from the first reference line on the first plane to be changed from the first angle to a third angle;
control the angle changing part in order for an angle by which the second optical transceiver is rotated from the second reference line on the second plane to be changed from the second angle to a fourth angle; and
obtain third information about the communication sensitivity between the first optical transceiver and the second optical transceiver from the first battery management device and the second battery management device.

13. The inspection device of claim 12, wherein the processor is configured to associate the first distance, the third angle, the fourth angle, and the third information about the communication sensitivity with each other and store the first distance, the third angle, the fourth angle, and the third information in the memory.

14. The inspection device of claim 13, wherein the processor is configured to:
select a single piece of information about communication sensitivity with a highest communication sensitivity among a plurality of pieces of information about communication sensitivity stored in the memory;
identify a distance between the first optical transceiver and the second optical transceiver, an angle by which the second optical transceiver is rotated on the first plane and an angle by which the second optical transceiver is rotated on the second plane, related to the selected single piece of information about the communication sensitivity; and
determine an identified distance and an identified angle as optimal communication specifications between the first battery management device and the second battery management device.
